# EUROPEAN PATENT APPLICATION

(11) **EP 1 981 004 A1**
(43) Date of publication of application: **15.10.2008**
(21) Application number: 07007530.4
(22) Date of filing: 12.04.2007
(51) Int. Cl.: G07F 7/10

(54) **Modular payment terminal equipment**

(71) Applicant: First Data Corporation, Greenwood Village, CO 80111 (US)
(72) Inventor: Kubo, Takayuki, 71083 Herrenberg (DE); Albrecht Norbert, 16341 Panketal (DE)
(74) Representative: Katérle, Axel

(57) **Abstract**

A modular scheme of building payment terminal equipment is provided. The payment terminal equipment runs a plurality of inter-communicating terminal processes collaborating to perform a payment transaction. The terminal equipment comprises a plurality of hardware modules, each of which runs at least one of the terminal processes and is equipped with an operating system kernel for providing the inter-process communication capability. Preferably, the inter-process communication adheres to open standards or protocols. This modular design of payment terminal equipment can greatly reduce the price of the terminal equipment and encourages inter-supplier collaboration as well as technological innovations.

## Description

### Field of the Invention

The present invention relates to payment terminal equipment and, more specifically, to a modular scheme of building payment terminal equipment using standardized, open software interfaces for inter-module communication.

### Background of the Invention

Payment terminals for making electronic payments have become ubiquitous. They are found in virtually every business establishment and typically comprise the following components: a card reader, a keypad (also termed as a PIN pad) for inputting a personal identification number (PIN) or code, a display, a printer, a so-called security processor, a so-called application processor, and a modem. Sometimes, the application processor and the security processor are integrated as one single processor. Under the coordination of the application processor these components run a set of processes such as reading a payment card, authenticating a card, forming a payment transaction message, transmitting a payment transaction message, and so on. Normally, these processes need to collaborate with each other in order to perform an electronic payment transaction completely. The process collaboration is handled by inter-process communication, which is, in the context of the present invention, a software interface (or interfaces) between two or more terminal processes, which handles the necessary synchronization, exchange of data, etc. there-between.

Conventionally, for physical protection as well as data security, the components of a payment terminal are integrated into one common terminal body, i.e. they are usually tightly coupled to each other and placed within one single housing. In addition, out of data security concerns, the design and implementation of the inter-process communication between the collaborating processes of a terminal is proprietarily controlled by the terminal manufacturer (except for the communication between the terminal and an external payment processing system; this communication interface should normally be a standardized interface, i.e. adhered to by all terminals). That is, the most aspects of the physical components and the inter-process communication there-between do not conform to any open standardized architecture; instead, they are kept strictly confidential to the terminal manufacturers or to the component suppliers thereof, (except for high level security and functional requirements forced by regulation bodies).

Due to this closeness, which hinders inter-supplier collaboration and discourages new technological innovation, the price of payment terminal equipment remains high and the development of the payment terminal industry remains sluggish.

Thus, there is a practical need for a new scheme of building payment terminal equipment, which is free from the above setbacks.

### Summary of the Invention

The present invention provides a modular scheme of building payment terminal equipment. Specifically, a payment terminal is constructed of a plurality of hardware modules utilizing standardized software interface(s) for inter-module communication.

According to one aspect of the present invention, the payment terminal is configured to run, or execute, or perform, a number of terminal processes. These processes collaborate, or inter-communicate, with one other to accomplish a complete electronic-payment transaction. The payment terminal is built up of more than one hardware modules. The first hardware module integrates, or comprises, or includes, a security processor and a memory. The memory stores certain cryptographic information. The security processor is adapted to receive data related to a payment transaction, perform one or more cryptographic functions on the payment transaction data based on the cryptographic information stored in the memory, and output cryptographically secured payment transaction data, which is to be transmitted to a payment transaction processing system. This payment terminal further comprises one or more other hardware modules which integrates (or integrate) at least one of following components: a payment-card reader, a PIN pad, a printer, a display, and a modem. A single component alone may form one hardware module; different components may also be combined into one hardware module. Each hardware module of the payment terminal is equipped with an operating system kernel and is capable of running at least one of the above-mentioned collaborating terminal processes, whereas the kernel provides the inter-process communication functionality. Particularly, the inter-process communication is implemented with a socket application programming interface socket (API); the processes running on the different hardware modules thus communicate with each other via sockets.

According to one embodiment of the payment terminal according to the present invention, the hardware modules are configured for cryptographically secured inter-module, inter-process communication. That is, the data transmitted between the hardware modules via the inter-process communication is encrypted. Specifically, in case the inter-process communication is implemented with a socket API, the encryption may be adhering to the Secure Socket Layer (SSL) protocol. That is, the hardware modules of the payment terminal are configured for encrypted inter-module, inter-process communication in accordance with the SSL protocol.

According to another embodiment of the payment terminal, the hardware modules may be configured for network protocol-based inter-module, inter-process communication. This means, the inter-process communication enables the hardware modules to communicate with each other over a network according to a certain network protocol. Specifically, the network protocol may be the TCP/IP protocol.

Since the payment terminal according to the present invention is built up of individual, stand-alone hardware modules, there exist numerous flexible ways to integrate them. For example, the first hardware module, the one integrating the security processor and the memory storing cryptographic information, and at least one of the above-mentioned one or more further hardware modules may be physically integrated into a common terminal body. As a more specific example, a second hardware module may integrate a payment-card reader and a PIN pad; this second hardware module and the first hardware module may be physically integrated into a common terminal body.

Of course, the first hardware module and at least one of the above-mentioned one or more further hardware modules may also be physically arranged remote from each other, e.g. having their own housings respectively, and are connected via a communication network for the inter-process communication. For example, the first hardware module and the above-mentioned second hardware module may be positioned at different physical locations yet connected to a common communication network.

It should be noted that the term "card" or "payment card" as used in this invention shall be understood as a synonym for any machine-readable item, device, or object accepted by a card-reading terminal as a means for authenticating the card holder and/or verifying his/her eligibility to perform electronic payments. However, the invention can also be applied to secure systems other than electric payment systems: Automated Teller Machines (ATMs) is one example; building security systems such as entry/exit by means of door cards is another example. In short, the invention is applicable to any terminal system which runs a plurality of inter-communicating processes.

### Brief Description of the Drawings

In the following, the present invention will be described with reference to exemplary embodiments illustrated in the drawings, wherein:
Fig. 1 is a block diagram showing a first embodiment of the payment terminal of the present invention. The payment terminal comprises a first and a second hardware modules interfaced with each other via inter-process communication;
Fig. 2 is a block diagram illustrating a second embodiment of the payment terminal of the present invention, the embodiment comprising, compared with that of Fig. 1, more hardware modules interfaced with each other via inter-process communication;
Fig. 3 is a block diagram illustrating a third embodiment of the payment terminal of the present invention, wherein a subset of the hardware modules are physically integrated into a common terminal body;
Fig. 4 is a block diagram illustrating a fourth embodiment of the payment terminal of the present invention, wherein the hardware modules are connected via a communication network; and
Fig. 5 is a block diagram illustrating a fifth embodiment of the payment terminal of the present invention, wherein one piece of a first hardware module and multiple pieces of a second hardware module are connected via a communication network.

### Detailed Description of the Drawings

In the following description, for purposes of explanation and not limitation, specific details are set forth, such as particular basic terminal components and their corresponding processes, particular types of inter-process communication, and particular configurations, in order to provide a thorough understanding of the invention. It will be apparent to one skilled in the art that the invention may be practised in other embodiments which depart from these specific details.

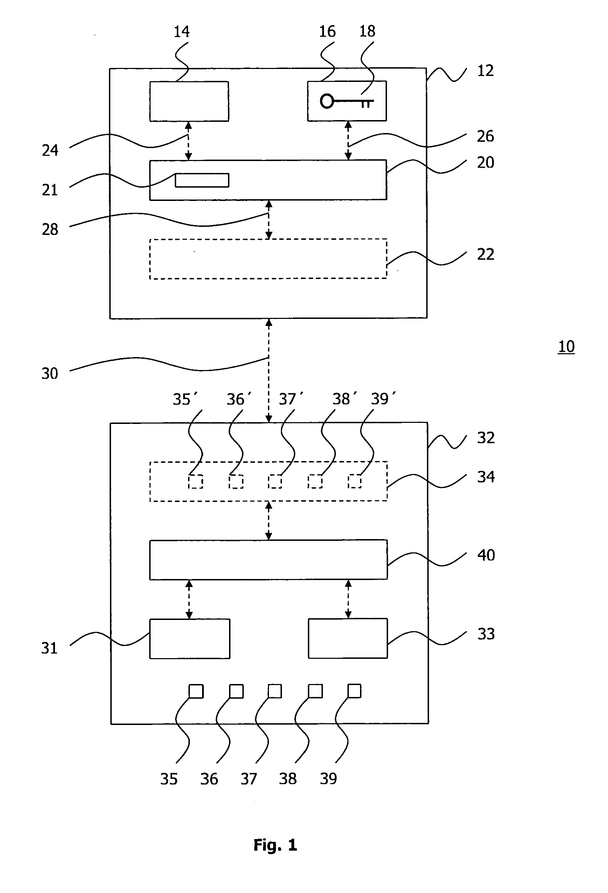

Fig. 1 illustrates a payment terminal 10 according to a first embodiment of the present invention. The payment terminal 10 is capable of running a plurality of terminal processes collaborating to perform an electronic payment transaction. These terminal processes include, and are not limited to, the following processes: an initiating process, a payment amount entering process, a card-reading process, a PIN entering process, a card authentication process, a payment transaction message formation process, a communication process including the transmission of a formed payment transaction message to a payment transaction processing system and the reception of a result there-from; a displaying process, a printing process, and so on. Here below, details of the processes are described with reference to an example of a complete electronic payment transaction. It should be pointed out that, although the example addresses all of the above processes, not every process is mandatory for a complete transaction. For example, in some circumstances, the PIN entering process is not required and thus not performed. Moreover, although the example describes the processes in a particular order, real-life transactions may follow the same order or a different order; i.e. the sequence of the performed processes for a complete transaction is flexible. Furthermore, although the example is related to the payment transaction task only, the same principle of building the terminal with modular hardware modules based on inter-communication applies to other tasks (i.e. non-payment-transaction tasks) of the terminal's as well. For instance, the payment terminal may be adapted to perform a software upgrade task which includes processes such as a VAS process (an application process), download, installation, run, end, maintenance, etc.

A typical payment transaction by means of the payment terminal 10 begins with an initiating process which prepares the payment terminal ready for performing a payment transaction. After the initiating process, a payment amount is entered into the terminal through either the terminal's PIN pad or a cash register. (In the case of entering the payment amount through the cash register, the cash register is connected to the terminal. For example, the cash register may be connected to a communication port of the terminal. The communication port may be an RS232C port or an Ethernet port.) Next, a payment card is swiped through or inserted into the payment-card reader of the payment terminal; the payment-card reader carries out a card-reading process to recognize, read, and/or record payment related information from the card - for instance, the card number is read. The payment related information retrieved from the card may be made available to a security processor of the payment terminal which carries out an authentication process to determine the validity of the card. This process may be followed by the entering of a personal identification number or, equivalently a personal identification code, through a PIN pad. Based on the input payment amount, the payment related information read from the card, the entered PIN, and perhaps additional relevant transaction information, an application processor of the payment terminal forms, or generates, an electronic payment transaction message and initiates it to be transmitted to a payment transaction processing system, such as a payment transaction authorization system. As stated before, the application processor and the security processor may be integrated into one single processor. The actual transmission process of the payment transaction message is handled by a modem of the payment terminal which communicates with the payment transaction processing system through a communication device and/or a communication network. The payment transaction processing system processes the payment transaction message and returns a processing result, such as an authorization result, to the payment terminal. Upon receiving the result, the payment terminal presents the result, either by displaying it on a display and/or printing it on a receipt by a printer. In summary, the payment terminal equipment 10 is configured to run various terminal processes which collaborate, or "inter-communicate", with each other to accomplish a complete payment transaction. (As pointed out earlier, in the conventional payment terminal architecture, the inter-process communication among most of these processes is implemented with proprietary technologies known to the terminal manufacturer only.)

The terminal equipment 10, as shown in Fig. 1, comprises a first hardware module 12 having, or integrating, or comprising, a security processor 14 and a memory 16. The memory 16 stores certain cryptographic information, figuratively illustrated as 18. The cryptographic information 18 may include one or more cryptographic keys and/or one or more cryptographic algorithms used for data encryption. The security processor 14 is adapted to receive payment transaction data and perform one or more cryptographic processes on such received data. The cryptographic processes may include card authentication, encryption of the payment transaction data, and the like. Some or all of the cryptographic processes make use of the cryptographic information 18 stored in the memory 16. For example, the security processor 14 may encrypt, or partially encrypt, the received payment transaction data with a certain cryptographic key stored in the memory 16. Once the payment transaction data is encrypted, or in other words, cryptographically secured, it is output from the security processor 14 to be transmitted to a payment transaction processing system (not shown in the figure). To better protect the highly sensitive cryptographic information 18, the first hardware module 12 may be arranged within a physically secure, tamper-resistant housing called the hardware secure module (HSM). An HSM not only provides a physically secure shelter for the memory 16 and the security processor 14, but also is equipped with many techniques for preventing the leak of the cryptographic information contained in the memory. One highly useful technique is the immediate erase of the cryptographic information from the memory as soon as any potential fraudulent manipulation of the physical housing is detected.

Also included in the first hardware module 12 is an operating system kernel 20. Kernel 20 includes a payment application kernel 21, which is responsible for forming, or generating, electronic payment transaction messages based on input payment transaction related information, and initiating them to be transmitted to a payment transaction processing system. In addition, kernel 20 provides the first hardware module 12 with, among other things, the inter-process communication capability for inter-communicating with the other hardware modules of the payment terminal 10.

A operating system kernel's primary function is to manage the computing resources and allow programs or processes to use these resources. Typically, the computing resources consist of CPU, memory, and input/output devices. In the context of the present invention, the computing resources of the first hardware module 12 include the processing power supplied by the security processor 14 and the memory capacity provided by the memory 16. The kernel 20 distributes the computing resources of the first hardware module 12 to allow one or more terminal processes to run on the first hardware module 12. Arrows 24, 26, and 28 in Fig. 1 represent the resource allocation function of the kernel's. Specifically, the terminal processes running on the first hardware module may include the card authentication process and the encryption of payment transaction data. The combination of the terminal processes are figuratively illustrated as the box 22 bordered with dotted lines. The kernel 20 also provides the inter-process communication between the process 22 running on the first hardware module 12 and the processes running on other hardware modules of the payment terminal. Arrow 30 indicates the inter-process communication functionality provided by the kernel 20.

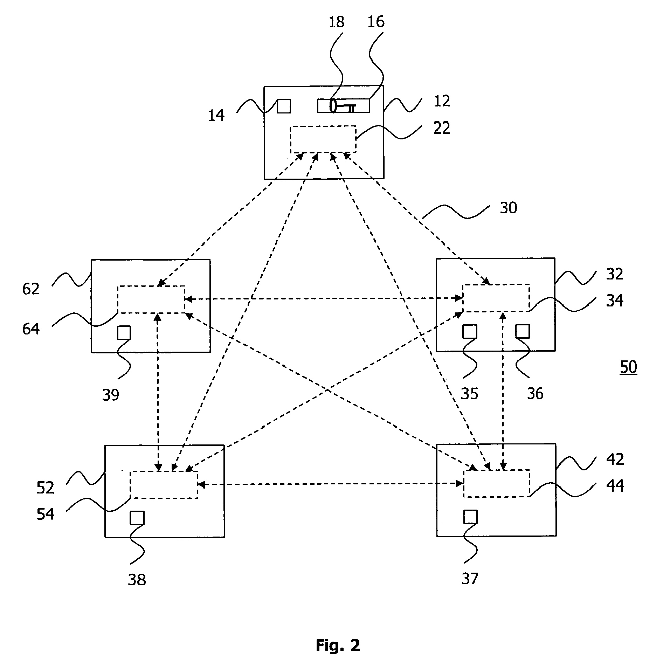

As shown in Fig. 1, the payment terminal 10 comprises one further hardware module, i.e. a second hardware module 32. The second hardware module 32 may be equipped with a processor 31 and/or a memory 33. This module integrates at least one of the following components: a payment card reader 35, a PIN pad 36, a printer 37, a display 38, and a modem 39. All these components may be integrated into the second hardware module 32, as indicated in Fig. 1, although it is equally applicable to respectively integrate each component into one individual hardware module. Further, as Fig. 2 illustrates, it is also possible to integrate more than one (but not all) of the components into the second module, some other component or components into a third hardware module (not shown in Fig. 2), and yet some other component or components into a fourth hardware module (not shown in Fig. 2), and so on. As Fig. 2 particularly shows, the card reader 35 and the PIN pad 36 are integrated into the second hardware module 32, the printer 37 into a third hardware module 42, the display 38 into a fourth hardware module 52, and the modem 39 into a fifth hardware module 62. It can thus be appreciated that the modular design proposed by the present invention allows a flexible configuration of the payment terminal.

Returning to Fig. 1, the second hardware module 32 is configured to run at least one of the collaborating terminal process, figuratively indicated as 34. For example, if the hardware module 32 integrates the payment card reader 35 only, 34 would be the corresponding card-reading process 35'. If the hardware module 32 integrates the PIN pad 36 only, the process 34 would be the corresponding PIN entry process 36'. If the hardware module 32 integrates more than one components, e.g. both the payment card reader 35 and the PIN pad 36, 34 would indicate a combination of the corresponding card-reading process 35' and the PIN code entry process 36'.

In addition to the above components, the second hardware module 32 includes an operating system kernel 40 which, as what the kernel 20 does to the first hardware module 12, allocates computing resources to run the process 34 and provides the inter-process communication capability to the second hardware module 32.

There are many techniques to implement the inter-process communication between the hardware modules. One possibility is to use an application programming interface (API), which is a useful tool to develop distributed systems and to achieve the cross-platform consistency that is a goal of many open systems and standards. An API is a software interface that facilitates data exchange and/or data sharing between two or more different software processes, applications, or even computing platforms. Specifically, an API is a set of rules for writing function or subroutine calls that access functions in an open library. Computer programs that are written according to the rules or functions of one certain API can communicate with any others that use the same API, regardless of the others' specifics. Thus, APIs can be developed for all computing platforms and operating systems and can be applied to both homogeneous and multi-platform applications. Examples of platform independent APIs include sockets, pipes (e.g. anonymous types or named types), FIFO, Common Object Request Broker Architecture (CORBA), Distributed Computing Environment (DCE), Message Bus (MBUS, specified in RFC 3259), ONC RPC, XML-RPC or SOAP, Internet Communications Engine (ICE), System V IPC, shared memory, semaphores, and many others.

Preferably, the inter-process communication 30 required by the payment terminal of the present invention is implemented with the socket API technology. Generally, a socket is an end-point of a bi-directional or multi-directional communication link. The operating system kernel of each hardware module is capable of setting up a socket for the hardware module; thus the sockets set up on different hardware modules allow the modules to inter-communicate with each other. Specific implementations of the socket API include UNIX Domains Socket, Internet Socket, Berkley Socket, and so on. Regardless of the particular type to use, the sockets provided by the operating system kernels facilitate an open, bi-directional or multi-directional communication between the processes running on different hardware modules of the payment terminal. In other words, for each hardware module, the respective operating system kernel provides the inter-process communication capability using a socket, whereas processes running on different hardware modules communicate via sockets.

The inter-process communication 30 between two hardware modules may be configured to provide further functionalities, data security, error recovery, data translation, and queuing being some examples of them. For instance, the inter-process communication may partially or fully encrypt the data transmitted thereupon according to certain cryptographic protocols. That is to say, the hardware modules are configured for encrypted inter-module, inter-process communication. One example of such cryptographic protocol is the secure socket layer (SSL) protocol or a transport layer security (TLS) protocol. These protocols provide end-point authentication and communication privacy using data encryption. For details of TLS and SSL, one may refer to RFC 2246, "The TLS protocol version 1.0" and RFC 4346, "The transport layer security protocol version 1.1", both standardized by the Internet Engineering Task Force (IETF) and retrievable under HTTP://www.ietf.org.

From another perspective, the inter-process communication may be designed to provide network protocol-based inter-process communication. Equivalently speaking, the hardware modules are configured for network protocol-based inter-module, inter-process communication, which is to say that the hardware modules can inter-communicate with each other via a communication network. The TCP/IP is one such network protocol. With TCP/IP protocol-based inter-process communication, the hardware modules of the payment terminal can communicate with each other via a TCP/IP based communication network, such as Internet.

Fig. 2 illustrates a second embodiment of the payment terminal equipment 50 of the present invention wherein the payment terminal 50 comprises the first hardware module 12 as already described for Fig. 1 and a number of further hardware modules 32, 42, 52, and 62. These further hardware modules 32, 42, 52, and 62 integrate a payment card reader 35, a PIN pad 36, a printer 37, a display 38, and a modem 39. As specifically shown in Fig. 2, the second hardware module 32 integrates the payment card reader 35 and the PIN pad 36; the third hardware module 42 integrates the printer 37, the fourth hardware module 52 integrates the printer 38, and the fifth hardware module 62 integrates the modem 39. Each one of the hardware modules 12, 32, 42, 52, 62 of the payment terminal can run at least one of the collaborating terminal processes, figuratively illustrated as 22, 34, 44, 54, and 64, respectively. Moreover, each of the hardware modules is equipped with an operating system kernel (not shown in Fig. 2) providing inter-process communication between the processes. The inter-process communication is represented by the bi-directional arrows 30 (in dotted line) linking the processes 22, 34, 44, 54, and 64.

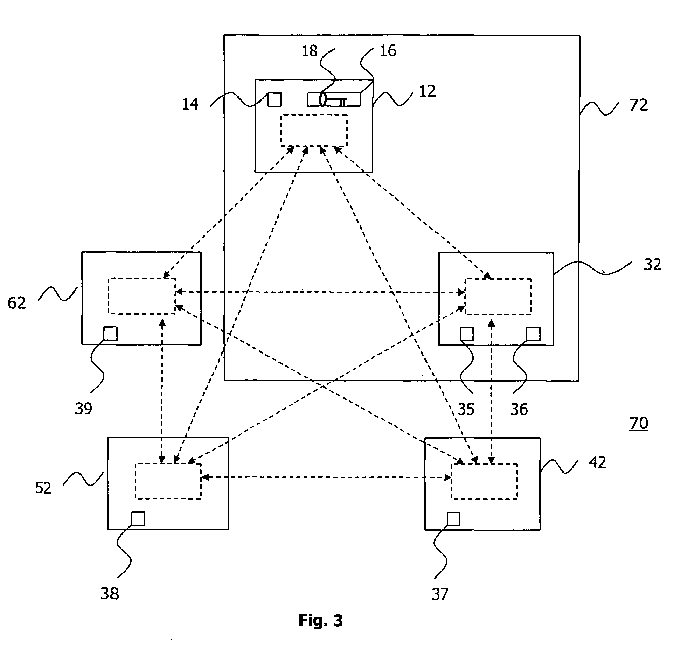

A third embodiment of the payment terminal of the present invention is described with reference to Fig. 3. As shown in this figure, the payment terminal 70 comprises a number of hardware modules 12, 32, 42, 52, and 62, the same as described above for Fig. 2. Two or more of these modules are physically integrated into one common terminal body 72 while the rest, if any, are placed outside the terminal body 72. Specifically in this embodiment, the first hardware module 12, i.e. the one integrating the security processor 14 and the memory 16 storing the cryptographic information 18, and at least one of the other hardware modules, e.g. the one 32 incorporating the payment card reader 35 and the PIN pad 36, are physically integrated into the common terminal body 72. Of course, any one or more of the rest hardware modules 42, 52, and 62 may be integrated into the same terminal body 72, or into a further common terminal body (not shown in Fig. 3). Such a physical integration of multiple hardware modules may be preferable in case certain local regulation security requirements must be conformed to.

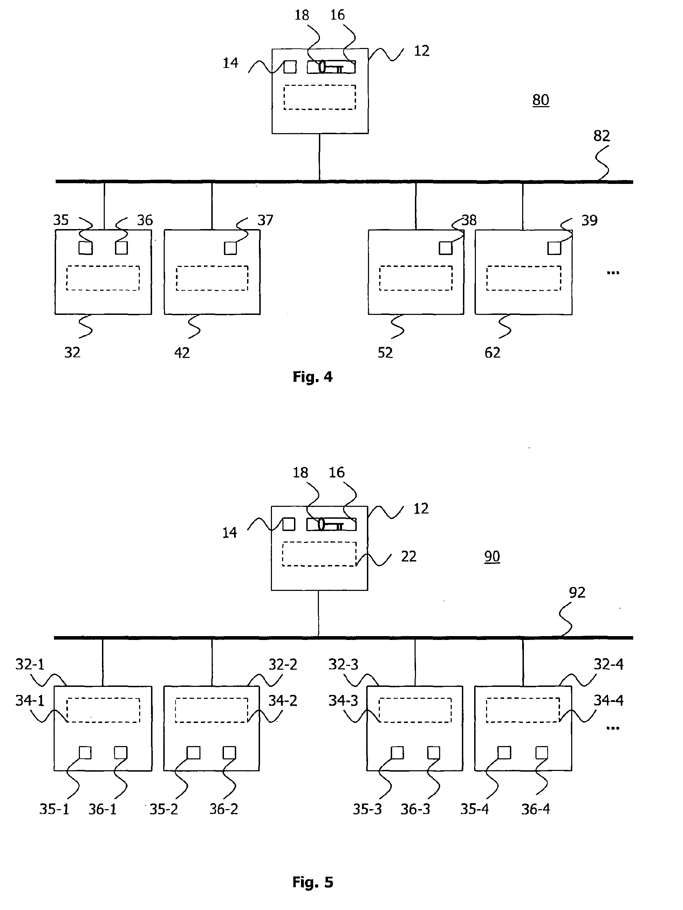

In contrast to the third embodiment, the fourth embodiment of the present invention, as shown in Fig. 4, illustrates that various hardware modules of the payment terminal 80 may be positioned remote from each other and connected via a communication network. As specifically shown in this figure, the first hardware module 12, the one integrating the security processor 14 and the memory 16 storing the cryptographic information 18, and at least one of the other hardware modules, e.g., the one 32 incorporating the payment card reader 35 and the PIN pad 36, are positioned at different geographical locations and are connected via a communication network 82. The communication network 82 connecting the hardware modules may be a local area network or a wide area network, a private communication network or a public one, a wire-lined network or a wireless network, etc.

Fig. 5 illustrates a fifth embodiment of the payment terminal 90 according to the present invention, especially with respect to a "network application" of the terminal. As to be explained in detail below, this embodiment is particular in that the terminal equipment 90 comprises one piece of a certain hardware module and multiple pieces of another hardware module whereas all the module pieces inter-communicate with one another via a communication network.

In the embodiment as shown in Fig. 5, several hardware modules are connected to a communication network 92, such as a local area network of a department store. Particularly, one piece of a first hardware module 12, which incorporates a security processor 14 and a memory 16 storing cryptographic information 18, is connected to the network 92. The first hardware module may be an HSM. As can be understood later, this module "centrally" performs the card authentication process and the encryption of payment transaction data. Apart from the first hardware module 12, a plurality pieces of a second and different hardware module 32, i.e. 32-1, 32-2, 32-3, and 32-4, are connected to the same network 92. Each piece of this second hardware module, 32-1, 32-2, 32-3, and 32-4, integrates a payment card reader 35-1, 35-2, 35-3, and 35-4 and a PIN pad 36-1, 36-2, 36-3, and 36-4, respectively. Effectively, each piece of 32-1, 32-2, 32-3, and 32-4 is capable of performing both processes of card-reading and PIN code entering. The combined process is shown in the figure as 34-1, 34-2, 34-3, and 34-4, respectively.

Although not shown in Fig. 5, other kinds of hardware modules integrating other terminal components, e.g. a printer or multiple printers, a display or multiple displays, a modem or multiple modem, are connected to the network 92 as well. Similar to the second hardware module, each of these other hardware modules may exist in either one single piece or a plurality of identical pieces. Furthermore, other non-payment terminal devices, such as personal computers, routers, and firewalls, may also be connected to the network 92.

The payment terminal equipment 90 can be highly useful for a retail business of a relatively large size, e.g. a department store or a big supermarket, which owns a large number of cashier desks, at each of which a payment terminal for marking electronic payment transactions needs to be installed. If conventional payment terminals were to be used, the store owner would have to spend a significant amount of money in purchasing a large number of stand-alone payment terminals. For example, suppose there are ten cashier desks in the department store, and each conventional payment terminal consists of one HSM, one PIN pad, and one payment card reader; then, in effect, the store owner would have to invest in ten HSMs, ten PIN pads, and ten payment card readers. In addition, the maintenance, repair, and/or upgrade of the terminals would be costly as well: If one single component of a certain payment terminal malfunctioned or needed hardware and/or software upgrade, the entire terminal would have to be replaced, regardless of the perfect working condition of the other components. What is more, if new components with new functionalities were desired for performing payment transactions, all the ten terminals would have to be replaced.

In contrast, if the modular scheme of building payment terminal equipment according to the present invention is used, the store owner can set up a "networked" payment terminal 90 as that in Fig. 5, which includes only one piece of HSM 12, and ten hardware modules 32 each incorporating a PIN pad and a card reader. The ten hardware modules 32 may be distributed at the ten cashier desks, respectively, for the customers to swipe payment cards and enter PIN codes; whereas the HSM 12 may be set up in a "back-stage" position, e.g. the accounting office of the department store, to centrally receive the payment transaction data from the ten hardware modules 32 via the network 92 and centrally handle card authentication and encryption of payment transaction data for all the ten cashier desks. Apparently, using the modular scheme of building payment terminal equipment according to Fig. 5, the department store can save the cost on the terminal purchase (e.g. only one HSM instead of ten must be purchased), let alone the additional save and flexibility in terminal maintenance, repair, and/or upgrade.

Naturally, as can be perceived by one skilled in the art, there can be many other possibilities for building the payment terminal equipment according to the present invention. One common characteristic of all the embodiments described above and the further possibilities is the modular scheme of building the payment terminal utilizing standardized inter-module, inter-process communication, such as the socket API. This invention thus allows different hardware modules, e.g. produced by different suppliers, to be flexibly integrated into a functional payment terminal by adhering to standardized, thus open interface or interfaces. This open architecture successfully breaks the barrier of proprietary configuration of conventional terminals. Consequently, the present invention can foster the global competition of terminal manufacturing, encourage technological innovation, and effectively lower the price of payment terminals, thereby benefiting both the public at large and the payment terminal industry.

## Claims

1. A payment terminal equipment configured to run a plurality of intercommunicating terminal processes collaborating to perform an electronic payment transaction, the terminal equipment comprising a first hardware module integrating a security processor and storing cryptographic information, the security processor adapted to receive data related to a payment transaction, perform one or more cryptographic functions on the payment transaction data based on the stored cryptographic information, and output cryptographically secured payment transaction data for transmission to a payment transaction processing system; the terminal equipment further comprising one or more further hardware modules integrating at least one of a payment card reader, a personal identification code input keypad, a printer, a display, and a modem; wherein each hardware module is configured to run at least one of the processes and is equipped with an operating system kernel providing inter-process communication capability using a socket application programming interface whereby processes running on different hardware modules intercommunicate via sockets.

2. The payment terminal equipment as recited in claim 1, wherein the hardware modules are configured for encrypted inter-module, inter-process communication.

3. The payment terminal equipment as recited in claim 2, wherein the hardware modules are configured for encrypted inter-module, inter-process communication in accordance with Secure Sockets Layer protocol.

4. The payment terminal equipment as recited in any of the preceding claims, wherein the hardware modules are configured for network protocol-based inter-module, inter-process communication.

5. The payment terminal equipment as recited in claim 4, wherein the hardware modules are configured for TCP/IP protocol-based inter-module, inter-process communication.

6. The payment terminal equipment as recited in any of the preceding claims, wherein the first hardware module and at least one of the one or more further hardware modules incorporating the payment card reader and the personal identification code input keypad are physically integrated into a common terminal body.

7. The payment terminal equipment as recited in any one of claims 1 to 5, wherein the first hardware module and at least one of the one or more further hardware modules incorporating the payment card reader and the personal identification code input keypad are located remote from each other and are connected via a communications network.

8. The payment terminal equipment as recited in claim 7, wherein the communications network is a wide area network or a local area network.
